# EUROPÄISCHE PATENTSCHRIFT

(11) **EP 2 753 532 B1**
(45) Veröffentlichungstag und Bekanntmachung des Hinweises auf die Patenterteilung: **21.10.2015**
(21) Anmeldenummer: 12762202.5
(22) Anmeldetag: 21.08.2012
(51) Int. Cl.: B62D 15/02, B60T 7/12, G08G 1/16, G06K 9/00, B60R 16/00, B60T 7/22, B60W 30/06, B60W 30/18, B60W 50/00

(54) **VERFAHREN UND VORRICHTUNG FÜR EIN ASSISTENZSYSTEM IN EINEM FAHRZEUG ZUR DURCHFÜHRUNG EINES AUTONOMEN ODER TEILAUTONOMEN FAHRMANÖVERS**
METHOD AND DEVICE FOR AN ASSIST SYSTEM IN A VEHICLE FOR CARRYING OUT AN AUTONOMOUS OR SEMI-AUTONOMOUS DRIVING MANEUVER
PROCEDE ET DISPOSITIF POUR UN SYSTEME D'ASSISTANCE D'UN VEHICULE SERVANT A EXECUTER UNE MAN UVRE AUTONOME OU PARTIELLEMENT AUTONOME

(30) Priorität: 08.09.2011 DE 102011112578
(43) Veröffentlichungstag der Anmeldung: 16.07.2014
(73) Patentinhaber: Continental Teves AG & Co. oHG, 60488 Frankfurt am Main (DE)
(72) Erfinder: ECKERT, Alfred, 55129 Mainz-Hechtsheim (DE); BAYER, Ronald, 63165 Mühlheim/Main (DE); LÜKE, Stefan, 61191 Rosbach vor der Höhe (DE); PILLER, Bernd, 63303 Dreieich (DE); HALASY-WIMMER, Georg, 71665 Vaihingen (DE)
(74) Vertreter: Bobbert, Christiana
(86) Internationale Anmeldenummer: PCT/DE2012/100244
(87) Internationale Veröffentlichungsnummer: WO 2013/034140

(56) Entgegenhaltungen:
- EP-A1- 2 312 497
- EP-A2- 0 835 796
- US-A1- 2005 270 177

## Beschreibung

Die Erfindung betrifft ein Verfahren und eine Vorrichtung für ein Assistenzsystem, das zur Durchführung eines autonomen oder teilautonomen Fahrmanövers eines Fahrzeugs dient, beispielsweise ein Parkassistenzsystem in einem Fahrzeug.

Seit einigen Jahren werden in Fahrzeugen vermehrt optische Sensorsysteme eingesetzt, insbesondere Kameras zur Erfassung des Fahrzeugumfeldes. Mittels spezieller elektronischer Einrichtungen und Software können diese Systeme verschiedene fahrerunterstützende Funktionen übernehmen, weshalb derartige Systeme auch unter der Bezeichnung Assistenzsysteme bzw. Fahrerassistenzsysteme bekannt sind. Einige dieser Assistenzsysteme sind bereits in der Lage autonome oder teilautonome Fahrmanöver durchzuführen, beispielsweise Einpark- und/oder Ausparkmanöver.

Ein System zur Einparkunterstützung ist beispielsweise aus der DE 10 2009 057 837 A1 bekannt. Das System dient in diesem Fall zur Unterstützung des Fahrers beim Einparken in eine Parkfläche einer Fahrzeuggarage. Mittels eines Kamerasystems wird die Umgebung des Fahrzeugs erfasst. Die Umgebungsbilder werden zur Erkennung der Garageneinfahrt der Fahrzeuggarage mit einem Bilderkennungsverfahren ausgewertet. Nach Erkennung der Garageneinfahrt wird das Umgebungsbild mit einem Zeichenerkennungsverfahren nach wenigstens einer auf einer Garagenrückwand angeordneten Markierung ausgewertet. Anschließend wird die Position des Fahrzeugs in Bezug auf die Garageneinfahrt und die Markierung ermittelt und es werden in Abhängigkeit der ermittelten Position des Fahrzeugs zur Steuerung des Fahrzeugs auf die Parkfläche erforderliche Lenkwinkel anzeigende Steuersignale erzeugt.

Die Steuersignale können als Lenkhinweise dem Fahrer angezeigt oder wenigstens einem Steuersystem zugeführt werden, um ein halbautomatisches oder vollautomatisches Fahren des Fahrzeugs auf die Parkfläche zu realisieren.

Für Assistenzsysteme zur Durchführung autonomer oder teilautonomer Fahrmanöver können heutzutage Sensorsystem eingesetzt, die in der Lage sind die gesamte Fahrzeugumgebung zu erfassen, im Sinne einer 360°-Sicht bzw. im Sinne einer Rundumsicht um das Fahrzeug, und mit dessen Ausgangssignalen in Form von detektierten Objekten rund um das Fahrzeug Fahrerassistenzfunktionen durchgeführt werden können. Die DE 10 2006 036 933 A1 zeigt hierzu ein Verfahren zur Erzeugung eines Gesamtbilds aus zumindest zwei überlappenden Einzelbildern, wobei die Einzelbilder durch an einem Kraftfahrzeug angeordnete Kameras erfasst und durch eine Bildverarbeitungseinrichtung zu dem Gesamtbild zusammengefügt werden.

Systeme wie in der DE 10 2006 036 933 A1 beschrieben, werden auch als TopView-Systeme oder omnidirektionale Kamerasysteme bezeichnet. TopView-Systeme umfassen typischerweise mehrere im oder am Fahrzeug angeordnete (reale) Aufnahmekameras, mit denen Bilddaten aus verschiedenen Bereich der Fahrzeugumgebung erzeugt werden. Die Bilddaten werden daraufhin in einer elektronischen Bilddatenverarbeitungseinrichtung unterschiedlichen Transformationen unterzogen und es wird ein zusammengesetztes Bild der gesamten Fahrzeugumgebung generiert. Dadurch kann beispielsweise eine Ansicht der um das Fahrzeug herum liegenden Umgebung aus einer Perspektive oberhalb des Fahrzeugdachs (Vogelperspektive) erhalten werden, d.h. es wird das Bild einer (virtuellen) Kamera oberhalb des Fahrzeugs erzeugt. Das Gesamtbild kann dem Fahrer des Kraftfahrzeugs fortlaufend auf einer Anzeigevorrichtung angezeigt werden, beispielsweise um Rangier- oder Parkmanöver zu erleichtern, oder es können die Gesamtbilddaten durch Assistenzsysteme zur Durchführung autonomer und teilautonomer Fahrmanöver verarbeitet bzw. ausgewertet werden, beispielsweise zur Objekterkennung und zur Ableitung von Steuerbefehlen, z.B. zur Steuerung von Lenkung, Gas und Bremse(n) des Fahrzeugs.

Gerade bei Assistenzsystemen, die zur Durchführung von autonomen oder teilautonomen Fahrmanövern dienen, beispielsweise von Einpark- oder Ausparkmanöver, liegt jedoch eine hohe Prozessverantwortung bei diesen Systemen. Es muss insbesondere zu jeder Zeit während eines autonomen oder teilautonomen Fahrmanövers sichergestellt sein, dass andere Verkehrsteilnehmer (z.B. Passanten) nicht gefährdet werden und dass keine Schäden am eigenen oder an anderen Fahrzeugen entstehen.

Die EP 0 835 796 A2 ist als nächstliegender Stand der Technik nach dem Oberbegriff des Anspruchs 1 zu sehen und offenbart daher ein System zur automatischen Steuerung eines Fahrzeugs, insbesondere in eine Parklücke, wobei eine Warnung an den Fahrzeugführer ausgegeben oder das automatische Fahrmanöver abgebrochen wird, wenn erkannt wird, dass ein sich ein Objekt im Fahrweg befindet oder dass sich ein Objekt in den Fahrweg bewegen könnte.

Weiterhin offenbart die US 2005/0270177 A1 einen Einparkassistenzsystem, bei dem ein automatisches Einparkmanöver abgebrochen wird, wenn während des Fahrmanövers das Öffnen einer Fahrzeugtür erkannt wird.

Der Erfindung liegt demnach die Aufgabe zugrunde, ein Verfahren und eine Vorrichtung für ein Assistenzsystem zur Durchführung von autonomen und teilautonomen Fahrmanövern anzugeben, wobei sichergestellt ist, dass die hohen Anforderungen betreffend die Prozessverantwortung des Assistenzsystems erfüllt werden und insbesondere eine Gefährdung für Mensch, Material und Umwelt weitgehend ausgeschlossen ist.

Diese Aufgabe wird durch ein Verfahren mit den Merkmalen nach Anspruch 1 und durch eine Vorrichtung mit den Merkmalen nach Anspruch 9 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung besteht darin, bei einem Assistenzsystem, das insbesondere ein TopView-System zur Durchführung eines autonomen oder teilautonomen Fahrmanövers nutzt, das aus mehreren Einzelbildern generierte Gesamtbild der Fahrzeugumgebung, neben der Verarbeitung zur Ableitung von Steuerbefehlen für Fahrmanöver, zusätzlich dafür zu nutzen, um wenigstens eine Beschränkung zu ermitteln und das Assistenzsystem in einen sicheren Zustand zu überführen, wenn wenigstens eine Beschränkung vorliegt. Unter Beschränkung können dabei grundsätzlich aus den Bilddaten des Gesamtbildes erfasste Bedingungen bzw. Situationen verstanden werden, die eine sichere Durchführung eines autonomen oder teilautonomen Fahrmanövers erschweren bzw. gefährden würden. Ein wesentlicher Vorteil der Erfindung besteht darin, insbesondere bei Einsatz des erfindungsgemäßen Verfahrens bzw. bei Ausgestaltung der erfindungsgemäßen Vorrichtung mit einem TopView-System, dass anhand des Gesamtbildes der Fahrzeugumgebung Beschränkungen besser und schneller erkannt werden können. Durch die Verwendung von Bilddaten eines TopView-Systems kann dabei dynamischer und flexibler auf bestimmte Umweltbedingungen bzw. auf kritische Situationen reagiert werden.

Das erfindungsgemäße Verfahren kommt bevorzugt bei einem Assistenzsystem zum Einsatz, das zur Durchführung eines autonomen oder teilautonomen Fahrmanövers eines Fahrzeugs dient.

Unter autonomen oder teilautonomen Fahrmanöver kann grundsätzlich jedes Fahrmanöver eines Fahrzeugs verstanden werden, bei dem eine, mehrere oder alle Steuerungs- und Regelungsaufgaben vom Assistenzsystem übernommen werden, die ansonsten bei manueller Durchführung des jeweiligen Fahrmanövers vom Fahrzeugführer durchgeführt werden müsste, und damit insbesondere auch vollständig automatisierte Fahrmanöver, die durchgeführt werden, ohne dass der Fahrer im Fahrzeug sitzt. Das erfindungsgemäße Verfahren kommt insbesondere bei einem Assistenzsystem zum Einsatz, dass zur Durchführung eines autonomen oder teilautonomen Einpark- oder Ausparkmanövers dient. Unter einem teilautonomen Fahrmanöver kann in diesem Fall ein Einpark- und/oder Ausparkmanöver verstanden werden, bei dem das Assistenzsystem eine oder mehrere Regelungs- und Steuerungsaufgaben übernimmt, z.B. die Steuerung und Regelung der Fahrzeugbremse(n) und der Fahrzeuglenkung. Unter einem autonomen Fahrmanöver ist in dem Fall vorzugweise ein Fahrmanöver zu verstehen, bei dem sämtliche Steuerungs- und Regelungsaufgaben vom Assistenzsystem übernommen werden, die erforderlich sind, um das Fahrzeug aus einer IST-Position in eine SOLL-Position (z.B. Parkposition) zu bewegen, bevorzugt einschließlich der Regelung/Steuerung der Fahrzeugbeschleunigung (Gas).

Das Assistenzsystem, bei dem das erfindungsgemäße Verfahren zum Einsatz kommt, umfasst vorzugsweise ein Kamerasystem, mittels dem aus einer Fahrzeugumgebung Bilddaten erzeugt und zur Durchführung des Fahrmanövers verarbeitet werden. Die Erzeugung der Bilddaten erfolgt dabei bevorzugt mittels mehrerer Kameras, die auf unterschiedliche Bereiche der Fahrzeugumgebung ausgerichtet sind. Die Bilddaten können anschließend zur Durchführung des Fahrmanövers mittels Bildverarbeitungseinrichtungen geeignet verarbeitet werden, beispielsweise derart, dass aus den Bilddaten Objekte wie andere Fahrzeuge und Hindernisse erkannt, die Abstände zu den erkannten Objekten ermittelt, die Länge und Tiefe einer Parklücke berechnet und anhand dieser Informationen das notwendige Fahrmanöver einschließlich der erforderlichen Lenkwinkel abgeleitet werden. Zum Erkennen von Objekten und Hindernissen sowie zum Berechnen der Länge und Tiefe der Parklücke können neben dem Kamerasystem zudem auch weitere Sensoren eingesetzt werden, wie z.B. Ultraschall-, Radar-, Lidar- und Lasersensoren.

Erfindungsgemäß wird das Assistenzsystem, bei der Durchführung eines autonomen oder teilautonomen Fahrmanövers, vorzugsweise dann in einen sicheren Zustand überführt, wenn anhand der mittels des Kamerasystems gewonnenen und mittels der Bildverarbeitungseinrichtungen verarbeiteten Bilddaten erkannt wird, dass wenigstens eine Beschränkung vorliegt. Unter Beschränkung kann dabei jede Beschränkung verstanden werden, die eine sichere und korrekte Durchführung des jeweiligen autonomen oder teilautonomen Fahrmanövers durch das Assistenzsystem beeinträchtigt, insbesondere visuelle Beschränkungen für das Kamerasystem und/oder Beschränkungen für das Assistenzsystem bzw. für das Fahrmanöver. Mit einer sicheren Durchführung ist insbesondere eine Durchführung des Fahrmanövers gemeint, bei der Schäden am Fahrzeug und eine Gefährdung von Mensch und Umwelt, insbesondere von Personen, weitgehend ausgeschlossen werden können. Unter einer korrekten Durchführung kann eine Durchführung des Fahrmanövers verstanden werden, unter Einhaltung der jeweils berechneten Steuerungs- und Regelungsgrößen. Unter einer visuellen Einschränkung des Kamerasystems ist insbesondere eine Einschränkung des Kamerasystems zu verstehen, bei der eine zuverlässige Erkennung von Objekten (Fahrzeuge, Hindernisse, Personen, etc.) nicht mehr sichergestellt ist.

Bei dem Kamerasystem des Assistenzsystems handelt es sich bevorzugt um ein System, bei dem mittels mehrerer Kameras Einzelbilder aus verschiedenen Bereichen der Fahrzeugumgebung erfasst und mittels Bildverarbeitungsmittel geeignet transformiert werden, um hierdurch ein Gesamtbild der Fahrzeugumgebung zu generieren. Bei dem Kamerasystem handelt es sich damit vorzugsweise um ein TopView-System.
Gemäß einer bevorzugten Ausführung des erfindungsgemäßen Verfahrens wird dabei sowohl zur Durchführung des autonomen oder teilautonomen Fahrmanövers, d.h. insbesondere zur Ableitung der Steuerungs- und Regelungsgrößen für das Fahrmanöver, als auch zur Erkennung der wenigstens einen Beschränkung das mittels des TopView-Systems generierte Gesamtbild der Fahrzeugumgebung verarbeitet. Besonders vorteilhaft an dieser Ausgestaltung des Verfahrens ist die Tatsache, dass mittels des Gesamtbildes der Fahrzeugumgebung alle Bereiche um Umfeld des Fahrzeugs hinsichtlich einer vorliegenden Beschränkung untersucht werden können, und das aufgrund der generierten Rundumsicht besser, schneller und dynamischer bzw. flexibler auf verschiedene auftretende Situationen vor und/oder während der Durchführung des Fahrmanövers reagiert werden kann.

Eine Beschränkung im Sinne des erfindungsgemäßen Verfahrens liegt erfindungsgemäß dann vor, wenn eine Ausrichtung wenigstens einer Kamera des Kamerasystems des Assistenzsystems von einer definierten Ausrichtung abweicht. Unter der definierten Ausrichtung ist dabei vorzugsweise die Ausrichtung einer Kamera zu verstehen, gemäß Ausrichtung bei Werkseinstellung bzw. die Normalausrichtung einer Kamera bei einer korrekten Justierung des Kamerasystems.
Insbesondere bei TopView-Systeme mit mehreren einzelnen Kameras, die jeweils auf unterschiedliche Bereiche der Fahrzeugumgebung ausgerichtet sind, kann der Umstand, dass eine der Kameras nicht mehr ordnungsgemäß ausgerichtet ist, dazu führen, dass blinde Ecken/Stellen bzw. tote Winkel im generierten Gesamtbild der Fahrzeugumgebung entstehen. In den toten Winkeln können Objekte infolge nichtmehr zuverlässig erkannt werden, wodurch eine sichere und korrekte Durchführung des jeweiligen autonomen oder teilautonomen Fahrmanövers nicht mehr hinreichend sichergestellt ist. Erfindungsgemäß wird insbesondere für den Fall, dass eine Ausrichtung wenigstens einer Kamera des Kamerasystems des Assistenzsystems von einer definierten Ausrichtung abweicht, das Assistenzsystem in einen sicheren Zustand überführt. Die Abweichung kann dabei direkt aus dem generierten Gesamtbild der Fahrzeugumgebung erkannt werden.

Eine Beschränkung im Sinne des erfindungsgemäßen Verfahrens kann zudem dann vorliegen, wenn wenigstens ein Bereich der mittels des Kamerasystems erfassten Fahrzeugumgebung keine Ausleuchtung aufweist oder eine Ausleuchtung aufweist, die unterhalb eines bestimmten Helligkeitsschwellwertes liegt. Keine oder eine zu geringe Ausleuchtung von Bereichen der Fahrzeugumgebung können beispielsweise bei Fahrmanövern auftreten, die am Abend oder bei Nacht und/oder in Garagen durchgeführt werden. Vorzugsweise wird im Rahmen des erfindungsgemäßen Verfahrens zunächst versucht mittels Beleuchtungseinrichtungen des Fahrzeugs, z.B. durch Ansteuerung der Fahrzeugscheinwerfer oder durch das Einschalten von am Fahrzeug angeordneten Zusatzleuchten die betreffenden Bereiche gezielt auszuleuchten. Ist die Beschränkung, insbesondere trotz gezielter Beleuchtung, weiterhin gegeben, wird das Assistenzsystem erfindungsgemäß in einen sicheren Zustand überführt.

Eine Beschränkung im Sinne des erfindungsgemäßen Verfahrens liegt weiterhin insbesondere dann vor, wenn anhand der Bilddaten des Kamerasystems erkannt wird, dass wenigstens eine der folgenden Betriebsbedingungen vorliegt:
- Fahrzeugtür geöffnet
- Kofferraum geöffnet
- Motorhaube geöffnet
- Fahrzeugspiegel ausgeklappt
- Fahrzeugspiegel angeklappt
- Insassen im Fahrzeug
- Personen in unmittelbarer Nähe des Fahrzeugs
Durch eine oder mehrere geöffnete Fahrzeugtüren sowie durch einen geöffneten Kofferraum und/oder eine geöffnete Motorhaube kann das Sichtfeld einer oder mehrerer Kameras des Kamerasystems beeinträchtigt sein. Eine oder mehrere geöffnete Fahrzeugtüren, ein geöffneter Kofferraum und/oder ausgeklappte Fahrzeugspiegel können während eines autonomen oder teilautonomen Fahrmanövers zudem dazu führen, dass die betreffenden Fahrzeugteile mit Objekten in der Fahrzeugumgebung kollidieren, was insbesondere Schäden am eigenen Fahrzeug verursachen würde. Sind eine oder mehrere Kameras des Kamerasystems z.B. in die Fahrzeugspiegel des Fahrzeugs integriert, oder sind Kameras des Kamerasystems in der Nähe von Seitenspiegeln des Fahrzeugs angeordnet, können angeklappte Seitenspiegel dazu führen, dass die Ausrichtung von Kameras des Kamerasystems nichtmehr einer korrekten Ausrichtung entspricht oder dass das Sichtfeld der Kameras durch die Spiegel beeinträchtigt bzw. verdeckt ist. Personen die sich in unmittelbarer Nähe des Fahrzeugs befinden, d.h. beispielsweise innerhalb des Bewegungsraumes bzw. auf dem geplanten Fahrweg des Fahrzeugs, oder Personen die sich während eines autonomen oder teilautonomen Fahrmanövers im Fahrzeuginnenraum aufhalten, können ebenfalls die sichere Durchführung des Fahrmanövers gefährden. Jede der genannten Betriebsbedingungen kann somit dazu führen, dass ein autonomes oder teilautonomes Fahrmanöver nicht sicher durchgeführt werden kann. Gemäß einer bevorzugten Ausgestaltung des erfindungsgemäßen Verfahrens wird daher das Assistenzsystem in einen sicheren Zustand überführt, wenn wenigstens eine der genannten Betriebsbedingungen, insbesondere direkt aus dem generierten Gesamtbild der Fahrzeugumgebung, erkannt wird. Hierzu kann das Gesamtbild der Fahrzeugumgebung mittels entsprechender Bildverarbeitungseinrichtungen geeignet verarbeitet werden, z.B. mittels Bilderkennungsverfahren, Mustervergleich/Mustererkennung etc. Gemäß einer optionalen Ausgestaltung kann das Vorliegen der wenigstens einen Beschränkung auch mittels fahrzeuginterner Sensorinformationen erkannt werden. Im Fall der vorangehend genannten Betriebsbedingungen bei denen erfindungsgemäß eine Beschränkung vorliegen kann, können hierzu beispielsweise fahrzeuginterne Sensoren genutzt werden, insbesondere Signale von Sensoren, die ohnehin im Fahrzeug vorhanden sind und die Informationen beispielsweise über den Öffnungszustand der Fahrzeugtüren, Kofferraum und oder über den Zustand des Motorhaubenschlosses liefern und/oder beispielsweise Signale von Sitzbelegungssensoren und Gurtsschlössern.

Die Überführung des Assistenzsystems in einen sicheren Zustand, führt bevorzugt dazu, dass das Assistenzsystem das Fahrzeug in den Stillstand überführt, vorzugsweise durch Ansteuerung der Fahrzeugbremse(n).

Die Überführung des Assistenzsystems in einen sicheren Zustand, kann insbesondere auch die Überführung des Assistenzsystems und/oder des Fahrzeugs in einen definierten Ausgangszustand umfassen. Hierbei kann das Fahrzeug beispielsweise in eine Ausgangsposition, insbesondere in dessen Ausgangsposition vor der Einleitung des autonomen oder teilautonomen Fahrmanövers, gebracht werden. Die Überführung des Assistenzsystems in einen Ausgangszustand kann beispielsweise darin bestehen, eine oder mehrere Kameras des Kamerasystems in eine definierte Ausrichtung (Normalausrichtung) zu überführen bzw. die Kameras des Kamerasystems automatisch (neu) zu justieren. Weiterhin können bei der Überführung des Fahrzeugs und/oder des Assistenzsystems in einen definierten Ausgangszustand die Fahrzeugspiegel des Fahrzeugs in eine für das Fahrmanöver erforderliche Position gebracht werden und oder es können die Fahrzeugtüren und/oder der Kofferraum des Fahrzeugs automatisch geschlossen werden.

In einer bevorzugten Ausgestaltung des erfindungsgemäßen Verfahrens wird dem Fahrer des Fahrzeugs das Vorliegen einer Beschränkung und/oder die Überführung des Assistenzsystems in den sicheren Zustand signalisiert. Die Signalisierung kann beispielsweise mittels akustischer, optischer und haptischer Signale erfolgen, wobei sowohl vorhandene Signaleinrichtungen im Fahrzeug, z.B. Hupe und (Warn-)Blinker, oder zusätzliche am/im Fahrzeug angeordnete Signaleinrichtungen verwendet werden können.

Das erfindungsgemäße Assistenzsystem ist bevorzugt in einem Fahrzeug angeordnet und dient zur Durchführung eines autonomen oder teilautonomen Fahrmanövers des Fahrzeugs, insbesondere eines Einpark- und/oder Ausparkmanövers. Das Assistenzsystem umfasst insbesondere ein Kamerasystem, das mittels mehrerer Kameras Einzelbilder aus verschiedenen Bereichen einer Fahrzeugumgebung erfasst und mittels Bildverarbeitungsmittel geeignet transformiert, um hierdurch ein Gesamtbild der Fahrzeugumgebung zu generieren. Bei dem Kamerasystem handelt es sich vorzugsweise um ein TopView-System. Zur Durchführung des Fahrmanövers und zur Ermittlung einer Beschränkung wird erfindungsgemäß das Gesamtbild der Fahrzeugumgebung verarbeitet. Das Assistenzsystem ist erfindungsgemäß weiterhin derart ausgestaltet, dass bei Vorliegen einer Beschränkung bei einem autonomen oder teilautonomen Fahrmanöver (d.h. vor und/oder während des Fahrmanövers) das Assistenzsystem in einen sicheren Zustand überführt wird, wobei eine Beschränkung dann vorliegt, wenn anhand der Bilddaten erkannt wird, dass eine Ausrichtung wenigstens einer Kamera des Kamerasystems von einer definierten Ausrichtung abweicht.

## Patentansprüche

1. **Verfahren** für ein Assistenzsystem, das zur Durchführung eines autonomen oder teilautonomen Fahrmanövers eines Fahrzeugs dient, insbesondere eines Einpark- oder Ausparkmanövers, und bei dem mittels eines Kamerasystems aus einer Fahrzeugumgebung Bilddaten erzeugt und zur Durchführung des Fahrmanövers verarbeitet werden, wobei das Assistenzsystem in einen sicheren Zustand überführt wird, wenn anhand der Bilddaten erkannt wird, dass eine Beschränkung vorliegt,
**dadurch gekennzeichnet, dass**
eine Beschränkung dann vorliegt, wenn eine Ausrichtung wenigstens einer Kamera des Kamerasystems von einer definierten Ausrichtung abweicht.

2. Verfahren nach Anspruch 1, **dadurch gekennzeichnet, dass**
- es sich bei dem Kamerasystem des Assistenzsystems um ein System handelt, bei dem mittels mehrerer Kameras Einzelbilder aus verschiedenen Bereichen der Fahrzeugumgebung erfasst und mittels Bildverarbeitungsmittel geeignet transformiert werden, um hierdurch ein Gesamtbild der Fahrzeugumgebung zu generieren, und
- zur Durchführung des Fahrmanövers und zur Ermittlung der Beschränkung das Gesamtbild verarbeitet wird.

3. Verfahren nach einem der vorangegangenen Ansprüche,
**dadurch gekennzeichnet, dass**
eine Beschränkung dann vorliegt, wenn wenigstens ein Bereich der Fahrzeugumgebung entweder keine Ausleuchtung aufweist oder eine Ausleuchtung aufweist, die unterhalb eines bestimmten Helligkeitsschwellwertes liegt.

4. Verfahren nach einem der vorangegangenen Ansprüche,
**dadurch gekennzeichnet, dass**
eine Beschränkung bei wenigstens einer der folgenden Betriebsbedingungen vorliegt:
- Fahrzeugtür geöffnet
- Kofferraum geöffnet
- Motorhaube geöffnet
- Fahrzeugspiegel ausgeklappt
- Fahrzeugspiegel angeklappt
- Insassen im Fahrzeug
- Personen in unmittelbarer Nähe des Fahrzeugs

5. Verfahren nach Anspruch 4,
**dadurch gekennzeichnet, dass**
das Vorliegend der wenigstens einen Betriebsbedingung mittels Bildverarbeitung der mittels des Kamerasystems gewonnenen Bilddaten erkannt wird.

6. Verfahren nach einem der vorangegangenen Ansprüche,
**dadurch gekennzeichnet, dass**
im sicheren Zustand des Assistenzsystems das Fahrzeug in einen Stillstand überführt wird.

7. Verfahren nach einem der vorangegangenen Ansprüche,
**dadurch gekennzeichnet, dass**
im sicheren Zustand des Assistenzsystems das Fahrzeug und/oder das Assistenzsystem in einen Ausgangszustand überführt werden.

8. Verfahren nach einem der vorangegangenen Ansprüche,
**dadurch gekennzeichnet, dass**
dem Fahrer des Fahrzeugs das Vorliegen einer Beschränkung und/oder die Überführung des Assistenzsystems in den sicheren Zustand signalisiert wird.

9. **Assistenzsystem** für ein Fahrzeug und zur Durchführung
eines autonomen oder Teilautonomen Fahrmanövers des Fahrzeugs, insbesondere eines Einpark- oder Ausparkmanövers, umfassend
ein Kamerasystem, das mittels mehrerer Kameras Einzelbilder aus verschiedenen Bereichen einer Fahrzeugumgebung erfasst und mittels Bildverarbeitungsmittel geeignet transformiert, um hierdurch ein Gesamtbild der Fahrzeugumgebung zu generieren, wobei
zur Durchführung des Fahrmanövers und zur Ermittlung einer Beschränkung das Gesamtbild der Fahrzeugumgebung verarbeitet wird,
bei Vorliegen einer Beschränkung bei einem autonomen oder teilautonomen Fahrmanöver das Assistenzsystem in einen sicheren Zustand überführt wird,
**dadurch gekennzeichnet, dass**
eine Beschränkung dann vorliegt, wenn anhand der Bilddaten erkannt wird, dass eine Ausrichtung wenigstens einer Kamera des Kamerasystems von einer definierten Ausrichtung abweicht.

## Claims

1. **A method** for an assistance system that serves to perform an autonomous or semi-autonomous driving maneuver of a vehicle, particularly a maneuver performed in order to get into or out of a parking space, and in which, by means of a camera system, image data are generated from the surroundings of a vehicle and processed in order to perform the driving maneuver, wherein the assistance system is put in a safe state if the image data show that a restriction is present,
**characterized in that**
a restriction is present if an alignment of at least one camera of the camera system deviates from a defined alignment.

2. The method according to Claim 1, **characterized in that**
- the camera system of the assistance system is a system in which individual images from various regions of the surroundings of the vehicle are acquired by means of several cameras and suitably transformed by means of image processing means in order to generate an overall image of the surroundings of the vehicle thereby, and
- the overall image is processed in order to perform the driving maneuver and in order to determine the restriction.

3. The method according to any one of the preceding claims, **characterized in that** a restriction is present if at least one region of the surroundings of the vehicle is not illuminated at all or is illuminated such that illumination is below a particular brightness threshold value.

4. The method according to any one of the preceding claims, **characterized in that** a restriction is present if at least one of the following operating conditions is present:
• vehicle door open
• trunk open
• hood open
• vehicle mirror swung out
• vehicle mirror swung in
• passengers present in the vehicle
• people present in the immediate vicinity of the vehicle

5. The method according to Claim 4, **characterized in that**
the presence of the at least one operating condition is detected by means of image processing of the image data acquired by means of the camera system.

6. The method according to any one of the preceding claims, **characterized in that** in the safe state of the assistance system, the vehicle is stopped.

7. The method according to any one of the preceding claims, **characterized in that** in the safe state of the assistance system, the vehicle and/or the assistance system are/is put in an initial state.

8. The method according to any one of the preceding claims, **characterized in that** the driver of the vehicle is signaled that a restriction is present and/or that the assistance system is put in the safe state.

9. **An assistance system** for a vehicle and for performing an autonomous or semi-autonomous driving maneuver of the vehicle, particularly a maneuver performed in order to get into or out of a parking space, comprising
a camera system that acquires individual images from various regions of the surroundings of a vehicle by means of several cameras and suitably transforms said individual images by means of image processing means in order to generate an overall image of the surroundings of the vehicle thereby, wherein
the overall image of the surroundings of the vehicle is processed in order to perform the driving maneuver and in order to determine a restriction,
the assistance system is put in a safe state in the event of the presence of a restriction in an autonomous or semi-autonomous driving maneuver,
**characterized in that**
a restriction is present if the image data show that an alignment of at least one camera of the camera system deviates from a defined alignment.

## Revendications

1. Procédé pour un système d'assistance qui sert à l'exécution d'une manoeuvre autonome ou partiellement autonome d'un véhicule, en particulier une manoeuvre pour se garer ou quitter une place de stationnement, et dans lequel, au moyen d'un système de caméras, des données d'images sont produites à partir d'un environnement du véhicule et sont traitées pour l'exécution de la manoeuvre, le système d'assistance étant conduit dans un état sûr quand, à l'aide des données d'images, il est détecté qu'il existe une restriction,
**caractérisé en ce**
**qu'**il existe une restriction quand une orientation d'au moins une caméra du système de caméras s'écarte d'une orientation définie.

2. Procédé selon la revendication 1, **caractérisé en ce que**
- concernant le système de caméras du système d'assistance, il s'agit d'un système dans lequel, au moyen de plusieurs caméras, des images individuelles provenant de différentes zones de l'environnement du véhicule sont captées et sont transformées de façon appropriée au moyen de moyens de traitement d'images pour générer ainsi une image globale de l'environnement du véhicule, et
- l'image globale est traitée pour l'exécution de la manoeuvre et pour la détermination de la restriction.

3. Procédé selon l'une des revendications précédentes,
**caractérisé en ce**
**qu'**il existe une restriction quand au moins une zone de l'environnement du véhicule soit ne présente aucun éclairage, soit présente un éclairage qui est inférieur à une valeur de seuil de luminosité définie.

4. Procédé selon l'une des revendications précédentes, **caractérisé en ce qu'**il existe une restriction en présence d'au moins une des conditions de fonctionnement suivantes :
- porte de véhicule ouverte
- coffre à bagages ouvert
- capot moteur ouvert
- rétroviseur rentré
- rétroviseur rabattu
- occupants présents dans le véhicule
- personnes à proximité immédiate du véhicule.

5. Procédé selon la revendication 4,
**caractérisé en ce que**
la présence de la condition de fonctionnement au moins au nombre de un est détectée au moyen du traitement d'images des données d'images acquises au moyen du système de caméras.

6. Procédé selon l'une des revendications précédentes,
**caractérisé en ce que**,
dans l'état sûr du système d'assistance, le véhicule est conduit dans un état d'arrêt.

7. Procédé selon l'une des revendications précédentes,
**caractérisé en ce que**,
dans l'état sûr du système d'assistance, le véhicule et/ou le système d'assistance sont conduits dans un état initial.

8. Procédé selon l'une des revendications précédentes,
**caractérisé en ce que**
la présence d'une restriction et/ou la conduite du système d'assistance dans l'état sûr est signalée au conducteur du véhicule.

9. **Système d'assistance** pour un véhicule et pour l'exécution d'une manoeuvre autonome ou partiellement autonome du véhicule, en particulier une manoeuvre pour se garer ou quitter une place de stationnement, comprenant
un système de caméras qui, au moyen de plusieurs caméras, capte des images individuelles en provenance de différentes zones d'un environnement du véhicule et les transforme de façon appropriée au moyen de moyens de traitement d'images pour générer ainsi une image globale de l'environnement du véhicule,
l'image globale de l'environnement du véhicule étant traitée pour l'exécution de la manoeuvre et pour la détermination d'une restriction,
le système d'assistance étant conduit dans un état sûr en présence d'une restriction lors d'une manoeuvre autonome ou partiellement autonome,
**caractérisé en ce**
**qu'**il existe une restriction quand, à l'aide des données d'images, il est détecté qu'une orientation d'au moins une caméra du système de caméras s'écarte d'une orientation définie.
